# EUROPÄISCHE PATENTSCHRIFT

(11) **EP 1 491 683 B1**
(45) Veröffentlichungstag und Bekanntmachung des Hinweises auf die Patenterteilung: **24.01.2007**
(21) Anmeldenummer: 04012681.5
(22) Anmeldetag: 28.05.2004
(51) Int. Cl.: E01B 37/00

(54) **Vorrichtung zur Erprobung eines Weichen-Herzstückes**
Device for testing a railway frog
Dispositif pour tester un coeur de voie

(30) Priorität: 23.06.2003 DE 20309695 U
(43) Veröffentlichungstag der Anmeldung: 29.12.2004
(73) Patentinhaber: Deutsche Bahn AG, 10785 Berlin (DE)
(72) Erfinder: Zoll, Andreas, 14774 Brandenburg (DE)
(74) Vertreter: Zinken-Sommer, Rainer

(56) Entgegenhaltungen:
- EP-A- 1 180 175
- US-B1- 6 725 782

## Beschreibung

Die Erfindung betrifft eine Vorrichtung zur Erprobung eines Weichen-Herzstückes unter Einsatzbedingungen, die denjenigen an einem im Gleisnetz eingebauten Herzstück einer Schienenweiche entsprechen, gemäß dem Oberbegriff des Anspruchs 1.

Die WO 00/70148 A offenbart eine derartige Vorrichtung, bei der mehrere, an einem Wagen montierte Sensoren zur Erfassung von Schäden an den Gleisen vorgeschlagen sind.

Das Gleisnetz der Deutsche Bahn AG verfügt über näherungsweise circa 90.000 Weichen. Im Verhältnis zu anderen Fahrwegelementen unterliegen diese Weichen einer besonders hohen Verschleissbeanspruchung. Insbesondere beim Befahren der Weiche in spitzer Richtung - darunter wird in Fachkreisen das Befahren der Weiche vom Weichenanfang her verstanden - treten beim Überlauf der Schienenfahrzeug-Räder über das Herzstück stossartig hohe statische und dynamische Quer- und Normalkräfte auf. Bei fortschreitendem Verschleiss bildet sich ein Höhenversatz zwischen der Fahrfläche der Flügelschiene und der Fahrfläche des Herzstückes. Dadurch wird die Stossbelastung wiederum erhöht. Ferner treten Schlupferscheinungen aufgrund von Differenzen der Rollradien an den beiden Rädern eines Fahrzeug-Radsatzes auf, welche ebenfalls verschleissfördernd wirken. Es ist somit nicht überraschend, dass Herzstücke bereits nach circa 3,6 Millionen Last-Tonnen erste Verschleisserscheinungen aufweisen (das entspricht bei einer durchschnittlichen Belastung von 75.000 Last-Tonnen / Tag einer Liegedauer von nur circa 3,5 Monaten). Bereits nach einer Liegezeit von nur 4 Jahren müssen viele Herzstücke verschleissbedingt ausgetauscht werden. Es ist deshalb das erklärte Ziel der Oberbau-Forschung, sowohl die werkstoffliche wie auch die konstruktive Ausgestaltung von Weichenanlagen zu optimieren.

Zur Vorbereitung kosten- und zeitintensiver Versuchsreihen an realen Weichen, die im Streckennetz eingebaut werden, ist man deshalb bestrebt, möglichst viele Parameter in Laborversuchen zu analysieren bzw. zu optimieren. Hierbei ist jedoch die Belastungsseite für derartige Modellversuche noch weitgehend ungeklärt.

Der Erfindung liegt deshalb die Aufgabe zugrunde, eine Vorrichtung zur Erprobung eines Weichen-Herzstückes unter Einsatzbedingungen, die denjenigen an einem im Gleisnetz eingebauten Herzstück einer Schienenweiche entsprechen, zu entwickeln, die Aufschluss über die zu erwartenden Lebensdauern definierter werkstofflicher Rad-/Schiene-Paarungen liefert. Insbesondere ist in der Fachwelt bislang völlig unklar, welchen Einfluss geometrische Skalierungen, Belastungsgrössen sowie Belastungszyklen auf die Ergebnisse modellbasierter Versuchsreihen haben.

Diese Aufgabe wird in Verbindung mit dem Oberbegriff des Patentanspruches 1 erfindungsgemäß dadurch gelöst, dass die Erprobungsvorrichtung ein als Probekörper dienendes Schienensegment aufweist, in dessen Schienenkopf eine geometrisch massstäblich verkleinerte Kontur des Herzstückes eingearbeitet ist. Dadurch kann auf vorrichtungstechnisch einfache Art und Weise ein zum Einsatz für Weichen-Herzstücke vorgesehener Werkstoff unter simulierten Einsatzbedingungen erprobt und einer aussagekräftigen Untersuchung hinsichtlich seines Verschleissverhaltens unterzogen werden.

Eine sinnvolle Ergänzung des erfinderischen Gedankens sieht vor, dass im Bereich der in den Schienenkopf eingearbeiteten Herzstück-Kontur eine mit einer Schweißnaht verfüllte Vertiefung oder Trennfuge eingearbeitet ist. Auf diese Weise ist es möglich, auch die Schweißzusatzwerkstoffe, die im Zuge von Auftragsschweißungen bei Reparaturmassnahmen oder aber auch im Zuge von Verbindungsschweissungen - beispielsweise bei Herzstücken, die mittels Elektronenstrahlschweissen aus angeschäfteten Regelschienen gefügt werden - an den Herzstücken zum Einsatz kommen, einer eingehenden Untersuchung hinsichtlich ihres Verschleissverhaltens, ihrer Standfestigkeit sowie ihres Fließwiderstandes zu unterziehen. Ebenso können auch alle anderen metallographischen und metallphysikalischen Aspekte einer schweisstechnischen Aufarbeitung bewertet werden. Zu diesem Zweck wird bei der Überprüfung von Auftragsschweissungen in den Schienenkopf des Probekörpers im Bereich der Herzstück-Kontur in bevorzugter Weise eine von der Herzstückspitze ausgehende und zur Fahrkante der Schiene parallele Längsnut eingefräst. Diese Ausnehmung wird sodann mit Schweißgut gefüllt, dem der zu überprüfende Schweißzusatzwerkstoff beigefügt ist, und anschliessend profiliert.

Die Unteransprüche geben weitere nützliche Ausgestaltungen der erfindungsgemässen Vorrichtung an.

Besonders vorteilhaft ist es, wenn die erfindungsgemässe Vorrichtung einen Rollkörper aufweist, der unter Einleitung einer Normalkraft auf dem Schienensegment abwälzt, und der in der Form eines Eisenbahnrades ausgeführt ist, dessen geometrische Maße im Querprofil dieselbe massstäbliche Verkleinerung wie die im Schienensegment eingearbeitet Herzstück-Kontur aufweisen.

Bevorzugt ist vorgesehen, dass die beim Wälzvorgang einzuleitende Normalkraft in der Grössenordnung der halben am realen Objekt auftretenden Normalkraft liegt. In aufwendigen Versuchsreihen konnte ermittelt werden, dass bei dieser Einstellung die Kontaktspannungen bei Modell und Original vergleichbar gehalten werden.

Weiterhin wird vorgeschlagen, dass ein Kurbeltrieb die für den Abwälzvorgang notwendige horizontale Relativbewegung in eine das Schienensegment aufnehmende Vorrichtung einbringt. Dies unterstützt eine konstruktiv einfache und platzsparende Gestaltung der erfindungsgemässen Vorrichtung.

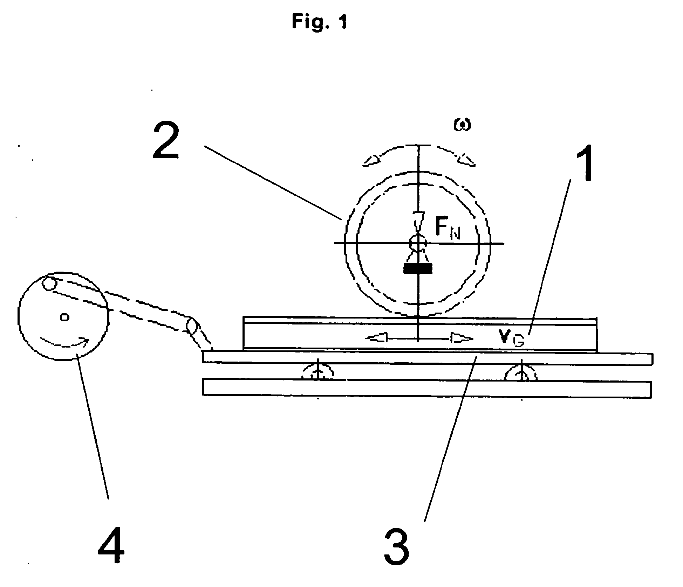

Der Erfindungsgedanke wird in nachfolgendem Ausführungsbeispiel visualisiert. Es zeigt in Prinzipdarstellung
- **Figur 1**: schematischer Aufbau und Kinematik der Erprobungsvorrichtung

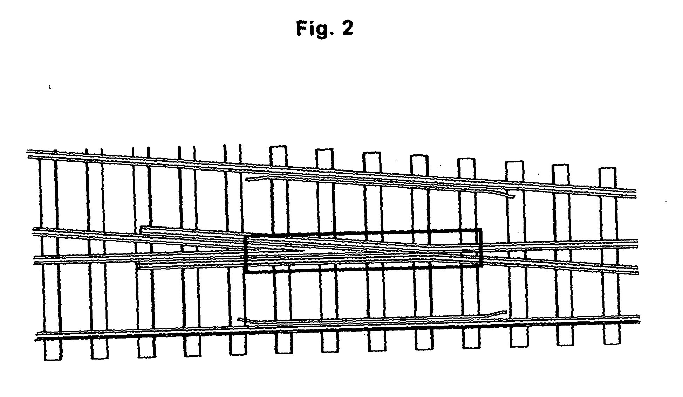

- **Figur 2**: schematische Darstellung einer Eisenbahnweiche mit markiertem Herzstück-Bereich
- **Figur 3**: schematische Darstellung der in den Kopf des Schienensegmentes eingefrästen Herzstück-Kontur (Draufsicht auf Schienensegment)

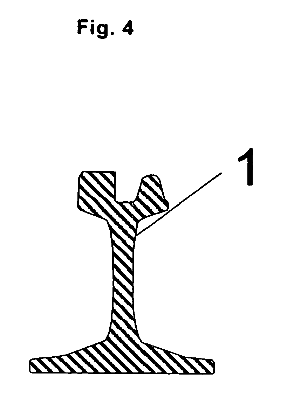

- **Figur 4**: Querschnitts-Darstellung des Schienensegmentes im Bereich der eingefrästen Herzstück-Kontur

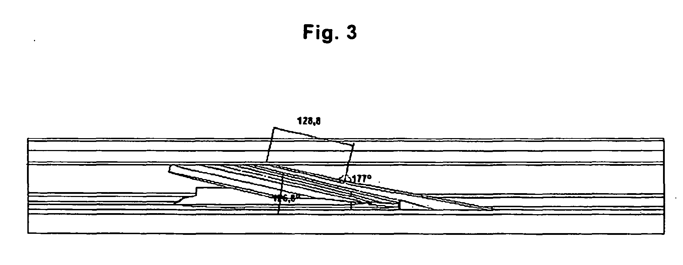

Die Prüfstands-Vorrichtung besteht aus einem geraden Schienensegment, dessen Fahrfläche in der horizontalen Ebene ausgerichtet ist und das in Schienenlängsrichtung axial beweglich gelagert ist. Dieses Schienensegment bildet den zu untersuchenden Probanden, wobei im Verlauf der gesamten Versuchsreihe verschiedene Schienensegmente aus unterschiedlichen Werkstoffen, deren Eignung vorab auf der Basis theoretischer Erwägungen ermittelt wurde, zum Einsatz kommen und auf ihre Verschleisseigenschaften untersucht werden. Ziel ist dabei die werkstoffliche Klassifizierung der für Herzstücke in Betracht kommenden Werkstoffe. In den Kopf des Schienensegmentes ist die im Masstab 2:1 verkleinerte Kontur eines starren Herzstückes eingefräst (siehe Figur 3).

Das Schienensegment (1) ist vertikal unterhalb eines um die Radachse frei drehbaren Rollkörpers (2) angebracht. Dieser Rollkörper ist hinsichtlich seiner Kontur als ein an sich bekanntes Schienenfahrzeugrad ausgeführt. Während der Raddurchmesser ebenfalls die Abmessungen eines Standard-Schienenfahrzeugrades (ca. 920 mm) aufweist, sind seine Abmessungen in Querschnittsrichtung (also die Maße des Querprofiles) um den Faktor 2 gegenüber den Maßen des Standard-Schienenfahrzeugrades ver-kleinert ausgeführt. Die werkstofflichen Kennwerte des Rollkörpers sind auf Grund der für Schienenfahrzeugräder geltenden nationalen und europäischen Richtlinien als gegeben zu betrachten und können nicht variiert werden, da im Bahnbetrieb der europaweite freizügige Einsatz von Rollmaterial gewährleistet bleiben muss.

Das Schienensegment (1) ist ferner auf einem horizontalen rollengelagerten Aufnahmeschlitten (3) gelagert, der mittels eines Kurbeltriebes (4) motorisch angetrieben wird und zyklische Bewegungen in Schienenlängsaches durchführt.

Der Rollkörper wird mit einer Normalkraft von ca. 108 kN (bzw. 11 t) beaufschlagt und dadurch während der zyklischen Horizontalbewegungen des Auflagerschlittens (3) auf das Schienensegment (1) mit der darin eingearbeiteten Herzstück-Kontur gedrückt. Dabei wurde festgestellt, dass eine Relativbewegung des Rades (2) gegenüber dem Schienensegment (1) (Schlupf) von 0,05% vorliegt.

In den durchgeführten Versuchsreihen wurde ebenfalls die Erkenntnis gewonnen, dass die Antriebsgeschwindigkeit des Auflagerschlittens (3) die Übertragbarkeit der Versuchsergebnisse auf die realen Verhältnisse nur unwesentlich beeinflusst.

Zu Beginn eines jeden Versuchzyklus werden die Härtewerte der Rad-/Schienepaarung bestimmt, wobei die Messwertabnahme beim Rad an drei in einem Winkel von 120° zueinander versetzten Positionen am Radumfang erfolgt. Die Messung am Schienensegment erfolgt an Messstellen im Querschnittsprofil, da eine Messung an der Oberfläche des Herzstückes geometriebedingt nicht realisierbar ist. Um Aussagen über den Zeitpunkt des Eintretens einer Schädigung bzw. Verformung machen zu können, wird ferner die Anzahl der Überroll-Vorgänge erfasst. Zur weiteren Beurteilung des Schädigungsablaufes werden Geometriemessungen von Herzstücken und Flügelschienen im Überlaufbereich vorgenommen. Diese Messungen ermöglichen eine Aussage über die Materialverformung. Die auf diese Weise bei gleichbleibender Belastung eintretenden Schädigungen am Schienensegment (1) ermöglichen - unter Berücksichtigung der ertragenen Lasttonnen - eine verlässliche Aussage über die Verwendbarkeit des Werkstoffes in einer späteren Versuchsreihe am realen Objekt.

### Bezugszeichenliste:

- 1: Schienensegment
- 2: Rollkörper
- 3: Aufnahmeschlitten für Schienensegment
- 4: Kurbeltrieb

## Patentansprüche

1. Vorrichtung zur Erprobung eines Weichen-Herzstückes unter Einsatzbedingungen, die denjenigen an einem im Gleisnetz eingebauten Herzstück einer Schienenweiche entsprechen,
**dadurch gekennzeichnet,**
**dass** die Erprobungsvorrichtung ein als Probekörper dienendes Schienensegment (1) aufweist, in dessen Schienenkopf eine geometrisch massstäblich verkleinerte Kontur des Herzstückes eingearbeitet ist.

2. Vorrichtung zur Erprobung eines Weichen-Herzstückes nach Anspruch 1, **dadurch gekennzeichnet, dass** im Bereich der in den Schienenkopf eingearbeiteten Herzstück-Kontur eine mit einer Schweißnaht verfüllte Vertiefung oder Trennfuge eingearbeitet ist.

3. Vorrichtung zur Erprobung eines Weichen Herzstückes nach Anspruch 1 oder 2, **dadurch gekennzeichnet, dass** die Vorrichtung einen Rollkörper (2) aufweist, der unter Einleitung einer Normalkraft auf der Herzstück-Kontur des Schienensegmentes (1) abwälzt.

4. Vorrichtung zur Erprobung eines Weichen-Herzstückes nach Anspruch 3, **dadurch gekennzeichnet, dass** der Rollkörper (2) in der Form eines Eisenbahnrades ausgeführt ist, dessen geometrische Maße im Querprofil dieselbe massstäbliche Verkleinerung wie die im Schienensegment (1) eingearbeitete Herzstück-Kontur aufweisen.

5. Vorrichtung zur Erprobung eines Weichen-Herzstückes nach einem der Ansprüche 1 bis 4, **dadurch gekennzeichnet, dass** die beim Abwälzvorgang eingeleitete Normalkraft in der Grössenordnung der halben am realen Objekt auftretenden Normalkraft liegt.

6. Vorrichtung zur Erprobung eines Weichen-Herzstückes nach einem der Ansprüche 1 bis 5, **dadurch gekennzeichnet, dass** ein Kurbeltrieb (4) die für den Abwälzvorgang notwendige horizontale Relativbewegung in eine das Schienensegment aufnehmende Vorrichtung (3) einbringt.

## Claims

1. A device for testing a frog under operating conditions that correspond to those of a frog of a switch installed in the trackage,
**characterized in**
**that** the test device features a rail segment (1) that serves as the test piece and into the rail head of which a geometrically scaled-down contour of the frog is machined.

2. The device for testing a frog according to claim 1, **characterized in that** a depression or commissure is produced in the region of the frog contour machined into the rail head and filled with a welding seam.

3. The device for testing a frog according to claim 1 or 2, **characterized in that** the device features a rolling body (2) that rolls on the frog contour of the rail segment (1) and simultaneously introduces a normal force.

4. The device for testing a frog according to claim 3, **characterized in that** the rolling body (2) is realized in the form of a rail vehicle wheel, the geometric dimensions of which in the transverse profile are scaled down analogous to the frog contour machined into the rail segment (1).

5. The device for testing a frog according to one of claims 1 to 4, **characterized in that** the normal force introduced during the rolling process lies on the order of one-half the normal force exerted upon the real object.

6. The device for testing a frog according to one of claims 1 to 5, **characterized in that** a crank drive (4) is provided for subjecting the device (3) accommodating the rail segment to the horizontal relative movement required for the rolling process.

## Revendications

1. Dispositif d'essai d'un coeur d'aiguillage dans des conditions d'utilisation équivalant à celles d'un coeur d'aiguillage intégré dans le réseau de voies d'un aiguillage ferroviaire,
**caractérisé en ce que**
le dispositif d'essai présente un segment de rail (1) servant de corps d'essai, dans le champignon de rail duquel est creusé un contour réduit géométriquement à l'échelle du coeur d'aiguillage.

2. Dispositif d'essai d'un coeur d'aiguillage selon la revendication 1, **caractérisé en ce que**, dans le contour de coeur d'aiguillage creusé dans le champignon de rail, un renfoncement ou un plan de joint rempli de cordon de soudure est réalisé.

3. Dispositif d'essai d'un coeur d'aiguillage selon la revendication 1 ou 2, **caractérisé en ce que** le dispositif comporte un corps roulant (2) qui roule en introduisant une force normale sur le contour de coeur d'aiguillage du segment de rail (1).

4. Dispositif d'essai d'un coeur d'aiguillage selon la revendication 3, **caractérisé en ce que** le corps roulant (2) est réalisé sous la forme d'une roue de chemin de fer dont les dimensions géométriques présentent en profil transversal la même réduction à l'échelle que le contour de coeur d'aiguillage creusé dans le segment de rail (1).

5. Dispositif d'essai d'un coeur d'aiguillage selon une des revendications 1 à 4, **caractérisé en ce que** la force normale conduite lors du processus de roulement se situe dans l'ordre de grandeur de la moitié de la force normale se produisant sur l'objet réel.

6. Dispositif d'essai d'un coeur d'aiguillage selon une des revendications 1 à 5, **caractérisé en ce qu'**une commande à manivelle (4) introduit le mouvement relatif horizontal nécessaire pour le processus de roulement dans un dispositif (3) recevant le segment de rail.
